# EUROPEAN PATENT APPLICATION

(11) **EP 4 461 510 A1**
(43) Date of publication of application: **13.11.2024**
(21) Application number: 23386034.5
(22) Date of filing: 11.05.2023
(51) Int. Cl.: B29C 65/06, B29C 65/00, B29L 31/00, B29L 31/30

(54) **VIBRATION WELDING METHOD**

(71) Applicant: B/E Aerospace (UK) Limited, Leighton Buzzard, Bedfordshire LU7 4TB (GB)
(72) Inventor: TRANAKIDIS, Pavlos, Newcastle, BT33 0FB (GB); BALLOCCHI, Paolo, Dundrum, BT33 0RH (GB); VAN TOOREN, Michael, San Diego, California, 92122 (US)
(74) Representative: Dehns

(57) **Abstract**

There is provided a method of welding a first component (120) to a first part (130) and a second part (140), wherein the first component (120), the first part (130) and the second part (140) comprise thermoplastic material. The first component (120) is arranged between the first part (130) and the second part (140) such that at least a portion (132) of the first part (130), at least a portion (122) of the first component (120) and at least a portion (142) of the second part (140) overlap each other. A load (F) is applied to push a first surface (124) of the first component (120) against the first part (130) so as to establish a first welding interface (150) and to push a second, opposite surface (126) of the first component (120) against the second part (140) so as to establish a second welding interface (152). One of the first component (120) or the first and second parts (130, 140) is vibrated to form a first weld joint (154) at the first welding interface (150) and a second weld joint (156) at the second welding interface (152).

## Description

### TECHNCIAL FIELD

The present disclosure relates to a method of welding a component to a first part and a second part and to a thermoplastic structure formed by the welding method.

### BACKGROUND

Thermoplastic materials are increasingly being used in various aerospace and automotive applications. Various welding techniques are being developed for the formation of thermoplastic structures. One possibility is to use vibration welding for this purpose. This can be particularly advantageous when forming complex structures comprising hollow and/or curved geometries. Welding such structures by known processes can be expensive and time consuming. There is a need in the art therefore for improved vibration welding techniques.

### SUMMARY

According to an example of the disclosure, a method of welding a first component to a first part and a second part is provided. The method comprises: arranging the first component between the first part and the second part such that at least a portion of the first part, at least a portion of the first component and at least a portion of the second part overlap each other; applying a load to push a first surface of the first component against the first part so as to establish a first welding interface and to push a second, opposite surface of the first component against the second part so as to establish a second welding interface; vibrating one of the first component or the first and second parts to form a first weld joint at the first welding interface and a second weld joint at the second welding interface, wherein the first component, the first part and the second part comprise thermoplastic material.

In this example, or any of the following examples of the disclosure, one or more of the first component, the first part and the second part may comprise a fiber-reinforced thermoplastic composite.

According to an example of the disclosure, a method of forming a structure is provided. The method comprises: providing a first component and a second component, wherein the second component comprises a first part and a second part; and welding the first component to the first part and to the second part according to the method of welding a first component to a first part and a second part in any of the above examples.

In some examples, the second component may comprise a channel. In some examples, welding the first component to the to the first part and to the second part of the second component may close the channel to create a hollow portion of the structure.

In some examples, a first section of the channel may extend in a first direction and a second section of the channel may extend in a second direction.

In some examples, the first and second weld joints may be formed simultaneously in the first direction and the second direction.

In some examples, the method may further comprise forming the second component by stamping from a sheet of thermoplastic material.

In some examples, the first part of the second component may be formed by the stamping from the sheet of thermoplastic material.

In some examples, forming the second component by the stamping from the sheet of thermoplastic material may include: forming the channel to have a first side wall and a second side wall joined together by a base wall, wherein the first part is provided on the first side wall and wherein the second part forms a continuation of the second side wall; and bending the continuation of the second side wall relative to the second side wall such that the second part overlaps the first part.

In some examples, the method may further comprise: forming a dart in the second component prior to bending the continuation of the second side wall of the channel, wherein the dart is formed to provide leeway for bending the continuation of the second side wall along a curved section defined between the first section and the second section of the channel.

In at least some examples, the method may comprise forming a plurality of darts along the curved section.

In some examples, the dart may comprise a first edge and a second edge. In at least some examples, bending the continuation of the second side wall to form the second part may bring the first and second edges of the dart into contact.

According to an example of the disclosure, a structure formed using the method of any of the above examples is provided.

According to an example of the disclosure, there is provided a structure comprising: a first component positioned between a first part and a second part such that at least a portion of the first part, at least a portion of the first component and at least a portion of the second part overlap each other; a first weld joint between a first surface of the first component and the first part; a second weld joint between a second, opposite surface of the first component and the second part, wherein the first component, the first part and the second part comprise thermoplastic material.

In some examples, at least a portion of the structure may be hollow.

In some examples, the structure may comprise a seatback. In at least some examples, the structure may comprise a seatback for an aircraft seat.

In some examples, the structure may comprise a seat pan. In at least some examples, the structure may comprise a seat pan for an aircraft seat.

In some examples, the first and second parts may be a second component or may be part of a second component.

In some examples, a hollow portion of the structure may be defined by a channel of the second component, the first weld joint and the second weld joint.

In some examples, the channel may comprise a first section extending in a first direction and a second section extending in a second direction. In at least some examples, the first and second weld joints may extend continuously between the first and second sections. In at least some examples, the first and second weld joints may extend continuously along the first and second sections.

In some examples, the first component may comprise a diaphragm and the second component may comprise a frame.

In some examples, the first and second weld joints may be formed along an entire junction between the frame and the diaphragm.

### BRIEF DESCRIPTION OF THE DRAWINGS

Certain examples of the disclosure will now be described by way of example only and with reference to the accompanying drawings in which:
Figure 1 shows a flowchart for a method of welding a component to a first part and a second part according to various examples of the disclosure;
Figure 2 shows a diagram of a component welded to a first part and a second part according to various examples of the disclosure;
Figure 3 shows an example structure formed using the method of Figure 1 according to various examples of the disclosure;
Figure 4A-4C show schematic views of a second component being formed according to various examples of the disclosure;
Figure 5 shows an example structure formed using the method of Figure 1 according to various examples of the disclosure;
Figure 6 shows a cross-section of the structure of Figure 5 according to various examples of the disclosure; and
Figure 7 shows a cross-section of the structure of Figure 5 according to various examples of the disclosure.

### DETAILED DESCRIPTION

In vibration welding, at least two members are brought into contact under pressure to provide a welding interface. One of the two members is then vibrated relative to and against the other of the two members in order to generate heat at the welding interface. The heat melts adjacent material from each of the two members. The two members are fused or, in other words, welded together as the melted material resolidifies. A weld joint is formed at the welding interface where the two members are joined together. The pressure necessary to weld the members together is herein referred to as a weld load.

In any example, the disclosure may provide a method of vibration welding two or more members together. Each member can comprise a component or a part. In any example of the disclosure, a member may be constructed from any suitable thermoplastic material. The material may also be a thermoplastic composite. Fibre reinforcements, for example, may be embedded within a thermoplastic material or, in other words, matrix to form a fibre-reinforced thermoplastic composite. Examples of the fibre reinforcements include but are not limited to metal fibres (e.g., aluminium fibres, brass fibres, and stainless steel fibres), carbon fibres (including graphite fibres such as polyacrylonitrile (PAN)-based carbon fibres, rayon-based carbon fibres, lignin-based carbon fibres, and pitch-based carbon fibres, insulating fibres (e.g., glass fibres), organic fibres (e.g., aramid fibres, polyparaphenylene benzoxazole (PBO) fibres, polyphenylene sulfide fibres, polyester fibres, acrylic fibres, nylon fibres, and polyethylene fibres), and inorganic fibres (e.g. silicon carbide fibres and silicon nitride fibres). Some or all of these fibres may be continuous fibres. Some or all of the fibres may also or alternatively be discontinuous, for example some or all of the fibres may be chopped fibres.

Examples of the thermoplastic material include, but are not limited to, a semicrystalline thermoplastic resin and an amorphous thermoplastic resin. Examples of the semicrystalline thermoplastic resin include, but are not limited to, polyester, polyolefin, polyoxymethylene (POM), polyamide (PA), polyarylene sulfide, polyketone (PK), polyetherketone (PEK), polyether ether ketone (PEEK), polyether ketone ketone (PEKK), polyvinylidene fluoride (PVDF), polytetrafluoroethylene (PTFE), polyaryletherketone (PAEK), polyether nitrile (PEN), fluororesin, and liquid crystal polymer (LCP). Examples of the polyester include, but are not limited to, polyethylene terephthalate (PET), polybutylene terephthalate (PBT), polytrimethylene terphthalate (PTT), polyethylene naphthalate (PEN), and liquid crystal polyester. Examples of the polyolefin include, but are not limited to, polyethylene (PE), polypropylene (PP), and polybutylene. An example of the polyarylene sulfide includes, but is not limited to, polyphenylene sulfide (PPS). An example of the fluororesin includes, but is not limited to, polytetrafluoroethylene. Examples of the amorphous thermoplastic resin include, but are not limited to, polystyrene, polycarbonate (PC), polymethyl methacrylate (PMMA), polyvinyl chloride (PVC), polyphenylene ether (PPE), polyimide (PI), polyamide imide (PAI), polyetherimide (PEI), polysulfone (PSU), polyether sulfone (PES), and polyarylate (PAR).

In any example of the disclosure, a member may be constructed from one or more layers. Each or some of these layers may include fibre reinforcements within a thermoplastic material. Within each layer, the fibre reinforcements may be unidirectional. The fibre reinforcements may alternatively be multi-directional (e.g., in a woven sheet, a mat of chopped fibres, etc.) in one or more of the layers.

In any example of the disclosure, a member may include between twenty percent (20%) and eighty percent (80%) of the fibre reinforcement (e.g., fibres) per unit of volume and between twenty percent (20%) and eighty percent (80%) of the thermoplastic material per unit of volume. In any example, one or more layer in a respective member may include between thirty-five percent (35%) and eighty percent (80%) of the fibre reinforcement (e.g., fibres) per unit of volume and between twenty percent (20%) and sixty-five percent (65%) of the thermoplastic material per unit of volume.

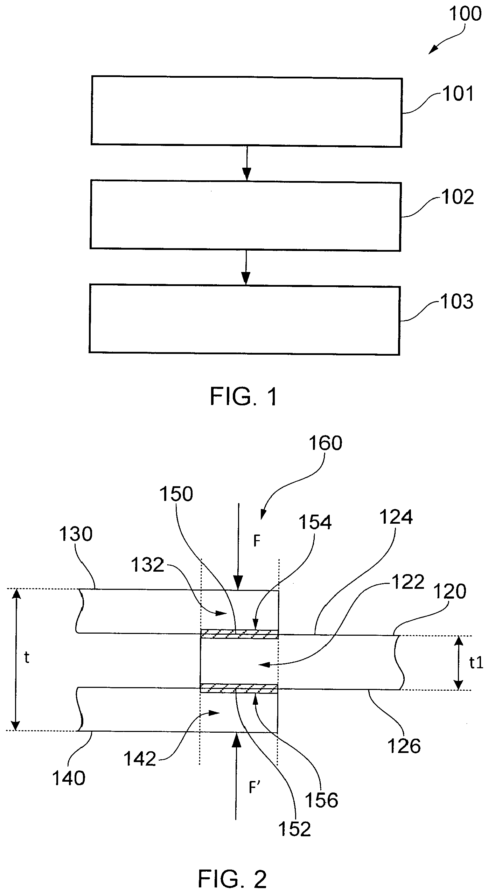

FIG.1 illustrates a method 100 for welding a first component 120 to a first part 130 and to a second part 140 according to various examples of the disclosure. FIG.2 illustrates a first component 120 welded to a first part 130 by a first weld joint 154 and to a second part 140 by a second weld joint 156 formed according to the method 100.

In step 101 of the method 100, the first component 120 is arranged between the first part 130 and the second part 140 such that a portion 122 of the first component 120 is overlapped by each of the first and second parts 130, 140. The first and second parts 130, 140 may be spaced apart and aligned with one another and/or positioned over one another. The first part 130 is arranged to overlap the first component 120 such that a portion 132 of the first part 130 overlaps the portion 122 of the first component 120. The second part 140 is arranged to overlap the first component 120 such that a portion 142 of the second part 140 overlaps the portion 122 of the first component 120. The portion 132 of the first part 130, the portion 122 of the first component 120 and the portion 142 of the second part 140 overlap each other. The first and second parts 130, 140 may be positioned in relation to one another such that the portion 122 of the first component 120 can be inserted, or otherwise positioned, between the first and second parts 130, 140.

The portion 122 of the first component 120 is configured to be welded to the first part 130 and to the second part 140. The portion 122 of the first component 120 may be substantially flat. The portion 122 may have a constant thickness t1. The thickness t1 may be defined between the first and second surfaces 124, 126 of the first component 120. The second surface 126 may be parallel and opposite of the first surface 124. In the example of FIG.2, the first component 120 comprises a sheet but in other examples of the disclosure the first component 120 may include the portion 122 and other non-planar features. For example, the first component 120 may comprise an L-shaped profile.

The portion 132 of the first part 130 may be substantially flat. The portion 142 of the second part 140 may be substantially flat. In the example of FIG.2, the first and the second parts 130, 140 each comprise a sheet but in other examples of the disclosure the first part 130 may include the portion 132 and other non-planar features and the second part 140 may include the portion 142 and other non-planar features.

In the example of FIG. 2, each of the first component 120, the first part 130 and the second part 140 comprise a fiber-reinforced thermoplastic composite but in other examples, one, any combination or none of these may comprise a fiber-reinforced thermoplastic composite.

In step 102 of the method 100, a load F is applied to push a first surface 124 of the first component 120 against the first part 130 so as to establish a first welding interface 150 between the portion 122 of the first component 120 and the portion 132 of the first part 130 and to push a second, opposite surface 126 of the first component 120 against the second part 130 so as to establish a second welding interface 152 between the portion 122 of the first component 120 and the portion 142 of the second part 140. The first component 120 may be compressed between the first and second parts 130, 140. The portion 122 of the first component 120 may be held into contact with the first and second parts 130, 140 under pressure. The first welding interface 150 and the second welding interface 152 may be formed at the portion 122 of the first component 120. The first welding interface 150 may be parallel to the second welding interface 152. The load F provides the weld load required to weld the first component 120 to the first and second parts 130, 140. The load F may be applied onto one or both of the first and second parts 130, 140. The direction of application may be such that one or both of the first and second parts 130, 140 are moved towards the first component 120.

In the example of FIG. 2, the load F is applied to the first part 130. The load F is applied via the portion 132 of the first part 130. When applying the load F to the first part 132, the first part 132 is moved towards the first component 120 and comes into contact with the portion 122 of the first component 120. The first part 130 pushes onto the first surface 124 of the first component 120 to move the first component 120 towards the second part 140. The second surface 126 of the first component comes into contact with the second part 140 via the applied load F. The second part 140 may be held stationary during the application of the load F. The second part 140 may be configured to restrict movement of the first part 130 in the direction the load F is applied. The second part 140 may exert a reaction force F' to the applied load F.

In step 103 of the method 100, one of the first component 120 or the first and second parts 130, 140 is/are vibrated to form a first weld joint 154 at the first welding interface 150 and a second weld joint 156 at the second welding interface 152. In any example of the disclosure including the method described here, the first weld joint 154 and the second weld joint may be formed simultaneously or concurrently. In other words, the first weld joint 154 and the second weld joint may both be formed by vibrating one of the first component 120 or the first and second parts 130, 140 whilst a load is applied to push the first component 120 and the first and second parts 130, 140 together. The step 103 of the method 100 is carried out under the application of the applied load F. In other words, the applied load F provides the required weld load. The heat from the generated friction at each of the first and second welding interfaces 154, 156 melts the adjacent material. The first surface 124 of the first component 120 is fused to the first part 130 and the second surface 126 of the first component 120 is fused to the second part 140 as a result. The vibration may occur in any direction perpendicular to the applied load F. At least in some examples of the disclosure, the vibration is linear. In other examples, the vibration may be orbital.

The first weld joint 154 may overlap the second weld joint 156 to define a welded region 160. The welded region 160 may comprise the portion 122 of the first component 120, the portion 132 of the first part 130 and the portion 142 of the second part 140. The portions 122, 132 and 142 may be fully welded to one another in the welded region 160. The welded region 160 may have a constant thickness t. The thickness t may generally be the summation of the thicknesses of the portions 122, 132 and 142, though it will be appreciated that a negligible amount of material may be lost during the formation of the first and second weld joints 154, 156. The welded region 160 may be referred to as a double-sided weld joint.

In examples, the method 100 may be carried out on a welding machine. The welding machine may be adapted to vibrate the first component 120, in relation to the first part 130 and the second part 140 or the first part 130 and the second part 140 in relation to the first component 120. The welding machine may comprise various tooling and fixtures to locate and hold the first component 120 in contact with the first and second parts 130, 140 and/or means for applying the load F to the first and second welding interfaces 150, 152. In examples where the load F is applied to both the first and second parts 130, 140, the load F may be applied via fixtures comprising clamping means. The means for vibrating may comprise an oscillating platform actuated by an electromagnetic motor or by hydraulics. The means for applying force may comprise a lifting platform configured to bring the first and second components in contact with one another. The welding process may be carried out at a frequency range between 200 and 240 Hz, and at amplitudes between 0.3 and 2.0 mm.

The method described above may be used to form a number of different structures. These may have various configurations and may be used in a number of applications including, but not limited to the aerospace and automotive industries. In examples, the method may be used to form structures with complex geometries. These structures may comprise curved sections and may otherwise require a plurality of welded joints to be formed within different planes. This significantly complicates the forming process and increases costs and production times for structures. Advantageously, by using the above described method, structures comprising complex geometries, such as structures comprising curved sections, can be formed by welding a plurality of welded joints simultaneously in the same plane.

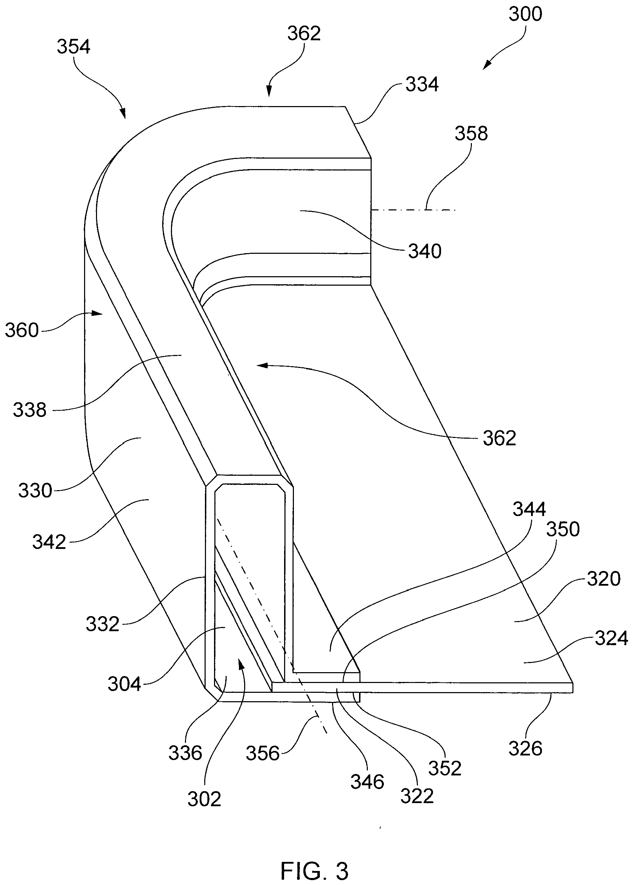

FIG. 3 illustrates a schematic view of an example structure 300, which may be manufactured from a first component 320, a first part 344 and a second part 346 and by using the method described above.

The structure 300 may be formed by the first component 320 and the second component 330. The second component 330 may comprise the first part 344 and the second part 346. In examples, the first and second parts 344, 346 may be formed as separate components. At least a portion 302 of the structure 300 may be hollow. The hollow portion 302 may be defined by a cavity 304. The hollow portion 302 of the structure 300 may be defined by a closed cross-section along its length. In examples, the hollow portion 302 is tubular.

The first component 320 may be substantially flat. In the example of FIG.3 and other examples, the first component 320 is a sheet or diaphragm. The first component 320 comprises a first surface 324 and a second surface 326. The second surface 326 may be parallel and opposite of the first surface 324. The first component 320 comprises a portion 322 configured to be welded to the second component 330. The portion 322 may have a constant thickness. The thickness of the portion 322 may be defined between the first and second surfaces 324, 326.

The second component 330 may extend between a first end 332 and a second end 334. A length of the second component 330 may be defined between the first and second ends 332, 334. A channel 336 may extend longitudinally through the second component 330. The channel 336 may extend between the first end 332 and the second end 334. The channel 336 may be open at the first and second ends 332, 334. The channel 336 may form at least part of the cavity 304 of the structure 300.

The second component 330 may comprise a base wall 338, a first side wall 340 and a second side wall 342. The first and second side walls 340, 342 may extend from the base wall 338. The first side wall 340 may be spaced apart from the second side wall 342. The base wall 338, the first side wall 338 and the second side wall 342 may define the channel 336. In the example of FIG.3, the base wall 338, the first side wall 338 and the second side wall 342 form a generally U-shaped cross-section. The second component 330 may comprise a constant cross-section along its length.

The first part 344 and the second part 346 of the second component 330 may be configured to be welded to the first component 320. The first and / or second parts 344, 346 may each comprise a flange. In other examples, the first part 344 may be a part of the first side wall 338. For example, the first part 344 may be an end surface of the first side wall 338. In the example of FIG. 3, the first part 344 may extend from the first side wall 340 away from and/or spaced from the base wall 338. In some examples, the first part 344 may be continuous with the first side wall 338 and may extend at an angle from the side wall 338. The second part 346 extends from the second side wall 342.In examples, the second part 346 may extend towards the first side wall 340 and/or be spaced from the base wall 338. The first and second parts 344, 346 may be spaced apart from one another. The first part 344 may overlap the second part 346. The first part 344 may be parallel to the second part 346. A distance between the first and second parts 344, 346 may be configured to allow for the positioning of the first component 320 between the first and second parts 344, 346 during formation of the structure 300. The distance between the first and second parts 344, 346 may define a clearance. In other words, the first component 320 may be received into the channel 336 through the clearance between the first and second parts 344, 346.

The first and second components 320, 330 may be joined together at a first weld joint 350 and at a second weld joint 352. The first and second weld joints 350, 352 may join the first and second components 320, 330 along the length of the second component 346. The formation of the first and second weld joints 350, 352 may close off the channel 336 of the second component 330 to form the hollow section 302 of the structure 300. By closing the channel 336, a closed-section may be provided along the length of the second component 330.

The structure 300 may comprise a curved section 354. The curved section 354 may be provided along part of the length of the channel 336 of the second component 330. The second component 330 may extends between the first end 332 and the curved section 354 in a first direction 356 to form a first section 360 of the channel 336. The second component 330 may extend between the second end 334 and the curved section 354 in a second direction 358, different from the first direction, to form a second section 362 of the channel. The first direction 356 may be approximately perpendicular to the second direction 358. In any example, approximately perpendicular may mean at an angle of between 45° and 135°, or in other examples, at an angle of between 20° and 110°. The curved section 354 may be defined between the first section 360 and the second section 362 of the channel 336.

The first and second weld joints 350, 352 may extend along the curved section 354. In other words, the first component 320 and the second component 330 may be welded together along the curved section 354 of the second component 330. During the step 103 of the method 100, the first and second weld joints 350, 352 may be formed simultaneously along the first and second directions 356, 358 and along the curved section 354.

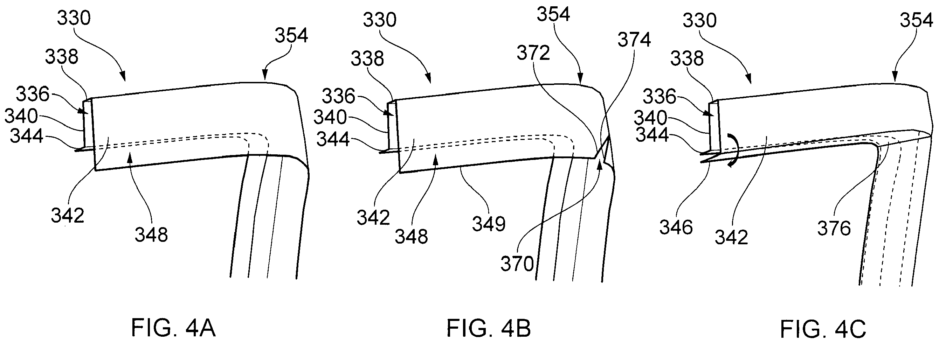

The method 100 may further comprise forming the second component 330. The second component 330 may be formed using one or more processes. FIG. 4A-4C schematically illustrate an example of forming the second component 330.

In the example of FIG. 4A-4C, the second component 330 is at least partially formed via a stamping process. The second component 330 may be stamped from a preform (not shown). The preform may comprise a sheet of thermoplastic or fiber-reinforced thermoplastic material. During the stamping process, the preform may be arranged in a die assembly. One or more dies of the die assembly may be used to stamp the second component 330. The second component 330 may be stamped to shape the channel 336 and the first part 344. The stamping of the second component may comprise a single step. During the stamping process, the channel 336 may be formed to comprise the base wall 338, the first side wall 340, the second side wall 342 such that the first side wall 340 and the second side 342 wall are joined together by the base wall 338. During the stamping process, the first part 344 may be formed on the first side wall 340 of the channel 336. The first part 344 may be extend at an angle from the first side wall 340. During the stamping process, the second part 346 may be formed as a continuation 348 of the second side wall 342. In the example of FIG. 4A-4C, the continuation 348 is formed as a portion of the second side wall 342. In other examples, the continuation may be formed to extend at an angle from the second side wall and away from the first side wall 340. FIG.4A illustrates the second component 330 as formed by the stamping process.

FIG. 4C illustrates a subsequent formation step during which the second part 346 of the second component 330 may be formed. The subsequent formation step may be carried out after the stamping process described above. Forming the second part 346 may comprise bending the continuation 348 of the second side wall 342 to overlap the first part 344. The continuation 348 of the second side wall 342 may be bent to be parallel to the first part 344. The continuation 348 of the second side wall 342 may be bent to be substantially flat. Prior to bending the continuation 348 of the second side wall 342, at least some of the continuation 348 may be heated locally to facilitate the formation of the second part 346. In this way, the forces required to bend the continuation 348 of the second side wall 342 can be reduced.

FIG. 4B illustrates the formation of a dart 370 in the second component 330 prior to forming the second part 346. The dart 370 may be provided along the curved section 354 of the second component 330. The dart 370 may be provided in a corner of the curved section 354. The dart 370 may comprise a cut-out in the continuation 348 of the second side wall 342. The dart 370 may be defined by a first edge 372 and a second edge 374. The first and second edges 372, 374 may extend inwards from a free end 349 of the continuation 348 of the second side wall 342. The first and second edges 372, 374 may converge at a single node. The dart 370 may be formed to provide leeway for bending the continuation 348 of the side wall 342 along the curved section 354 of the second component 330. As illustrated in Fig. 4C, bending the continuation 348 of the second side wall 342 into position, may bring the first and second edges 372, 374 into contact with one another to form a dart line 376. In examples, the dart 370 may be one of a plurality of darts provided along the curved section 346. It will be appreciated that the number of darts provided and the spacing between each respective dart may be selected depending on the radius of curvature of the curved section 354. In examples where the second component 330 comprises more than one curved section, one or more darts may be provided along each curved section as required.

In examples, the formation of a dart 370 may be omitted. In this subset of examples, the subsequent formation step during which the second part 346 of the second component 330 is formed may be carried out as a secondary step of the stamp forming process. In this subset of examples, cooling of the second component 330 may occur after the second part 346 has already been formed. The stamping of the second component from the preform and the secondary step may form a single process cycle. In other words, the stamping of the second component from the preform and the secondary step may be carried out on the same die assembly.

Advantageously, the additional steps described in relation to the example of FIG. 4A-4C allow for the second component 330 to be formed via stamping, which provides a cost and time efficient option for the manufacturing of the second component 330.

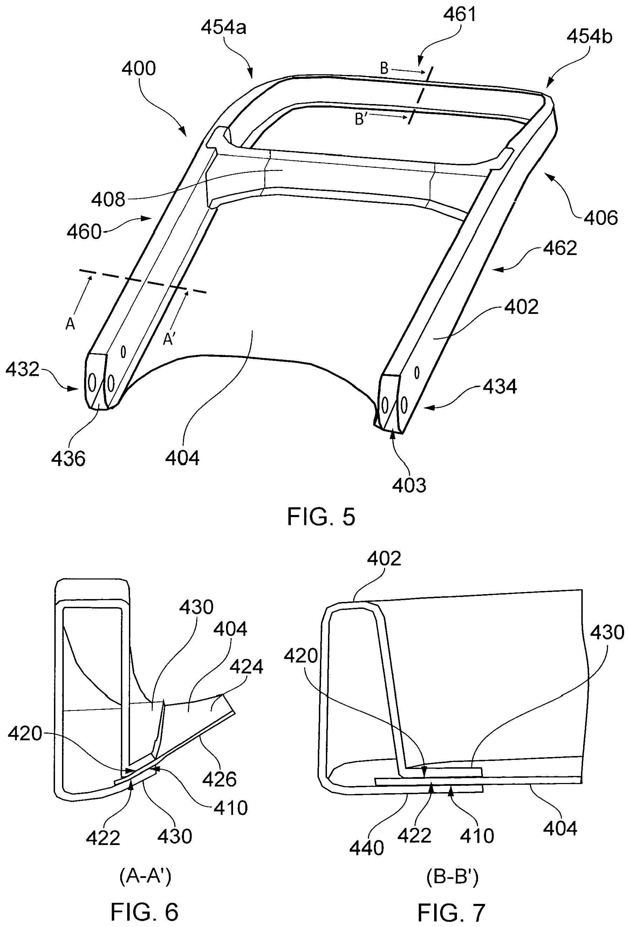

Figure 5 illustrates a seatback 400. FIG. 6 illustrates a cross-section A-A' of the seatback 400 taken in a first plane. FIG. 7 illustrates a cross-section B-B' of the seatback 400 a second plane.

The seatback 400 is an example of a structure 300 as described above which can be formed by the method 100 described above. The seatback 400 may comprise similar features to the structure 300 and so a detailed description of these will be omitted. The seatback 400 includes a seatback frame 402 and a diaphragm 404. The diaphragm 404 is formed as a first component. The seatback frame 402 is formed as a second component as described in any of the examples above. A first and a second part 430, 440 of the seatback frame 402 are each configured to be welded to the diaphragm 404. A portion of the diaphragm 404 is configured to be welded to the first and second parts 430, 440 of the seatback frame 402.

The seatback 400 may be a part of an aircraft seat. The seatback frame 402 may surround at least part of the diaphragm 404. The seatback frame 402 may form an exterior boundary of the seatback 400. The seatback frame 402 may be fully welded to the diaphragm 404. The seatback may comprise a headrest region 406. The seatback 400 may further comprise a support element 408.

The diaphragm 404 may comprise one of a glass fabric thermoplastic laminate, a glass laminate, a carbon laminate or a hybrid laminate. In other examples, the diaphragm may not comprise a laminate and may instead be formed be as one of a grid or a net bound by and/or welded to a surrounding frame.

The seatback frame 402 may comprise a channel 436. The channel 436 may define a hollow portion 403 of the seatback 400. In the example of FIG.5, the seatback 400 comprises a first curved section 454a and a second curved section 454b. The first and second curved sections 454a, 454b may be provided along part of the length of the channel 436 of the seatback frame 402. The seatback frame 402 may extend between a first end 432 and the first curved section 454a in a first direction to form a first section 460 of the channel 436. The seatback frame 402 may extend between the first curved section 454a and the second curved section 454b in a second direction to form a second section 461 of the channel 436. The seatback frame 402 may extend between the second curved section 454b and a second end 434 in a third direction to form a third section 462 of the channel 436. The first, second and third directions may lie in the same plane. The first and third directions may be parallel to one another. The second direction may be approximately perpendicular to the first and second directions. The seatback frame 402 may form a generally U-shaped component. The seatback frame 402 may be tubular. The first and second curved sections 454a, 454b may form part of the headrest region 406.

During formation of the seatback 400, the diaphragm 404 is arranged between the first part 430 and the second part 440 such that the portion 422 is overlapped by a portion of each of the first and second parts 430, 440. A load is applied to push a first surface 424 of diaphragm 404 against the first part 430 so as to establish a first welding interface and to push a second, opposite surface 426 of the diaphragm 404 against the second part 440 so as to establish a second welding interface. One of the diaphragm 404 or the seatback frame 402 is vibrated to form a first weld joint 410 at the first welding interface and a second weld joint 420 at the second welding interface.

Advantageously, by using the method 100 the diaphragm 404 can be welded to the seatback frame 402 along the entire junction between the seatback frame 402 and the diaphragm 404. In other words, both the first and second parts 430, 440 can be welded to the diaphragm 404 along the full extent of the seatback frame 402, including along the first, second and third sections 460, 461, 462 of the seatback frame 402 and along the first and second curved sections 454a, 454b of the seatback frame 402. It will be appreciated that the first weld joint 410 and the second weld joint 420 can be formed along all sections of the seatback frame 402 in the same step of the method 100. With some prior seatback designs, the junction between the diaphragm and the seatback frame in the headrest region remained unwelded due to limitations in the methods used.

Advantageously, by using the method 100 the diaphragm 404 can be welded to the seatback frame 402 by applying a load onto only one of the first and second parts 430, 440. In other words, the seatback frame 402 can be formed to be substantially tubular and/or hollow without the need for any internal tooling or supports.

The described method may be used to form other structures in addition to structure 300 and seatback 400, such as structures for aircraft or automotive applications. As a way of further example, the method 100 may be used to form a seat pan for an aircraft seat, an aircraft wing access panel, an aircraft door, a cabin window or an overhead storage compartment for an aircraft cabin.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of disclosure. Additionally, while various examples of the disclosure have been described, it is to be understood that aspects of the disclosure may include only some of the described examples. Accordingly, the disclosure is not to be seen as limited by the foregoing description, but is only limited by the scope of the appended claims.

## Claims

1. A method of welding a first component to a first part and a second part, the method comprising:
arranging the first component between the first part and the second part such that at least a portion of the first part, at least a portion of the first component and at least a portion of the second part overlap each other;
applying a load to push a first surface of the first component against the first part so as to establish a first welding interface and to push a second, opposite surface of the first component against the second part so as to establish a second welding interface;
vibrating one of the first component or the first and second parts to form a first weld joint at the first welding interface and a second weld joint at the second welding interface,
wherein the first component, the first part and the second part comprise thermoplastic material.

2. The method of claim 1, wherein one or more of the first component, the first part and the second part comprises a fiber-reinforced thermoplastic composite.

3. A method of forming a structure, the method comprising:
providing a first component and a second component, wherein the second component comprises a first part and a second part; and
welding the first component to the first part and to the second part according to the method of claim 1 or 2.

4. The method of claim 3, wherein the second component comprises a channel and wherein welding the first component to the first part and to the second part of the second component closes the channel to create a hollow portion of the structure.

5. The method of claim 4, wherein a first section of the channel extends in a first direction and a second section of the channel extends in a second direction, and wherein the first and second weld joints are formed simultaneously in the first direction and the second direction.

6. The method of claim 5, further comprising forming the second component by stamping from a sheet of thermoplastic material.

7. The method of claim 6, wherein the first part of the second component is formed by the stamping from the sheet of thermoplastic material.

8. The method of claim 7, wherein forming the second component by the stamping from the sheet of thermoplastic material includes:
forming the channel to have a first side wall and a second side wall joined together by a base wall, wherein the first part is provided on the first side wall and wherein the second part forms a continuation of the second side wall; and
bending the continuation of the second side wall relative to the second side wall such that the second part overlaps the first part.

9. The method of claim 8, further comprising forming a dart in the second component prior to bending the continuation of the second side wall of the channel, wherein the dart is formed to provide leeway for bending the continuation of the second side wall along a curved section defined between the first section and the second section of the channel.

10. The method of claim 9, wherein the dart comprises a first edge and a second edge; and
wherein bending the continuation of the second side wall to form the second part brings the first and second edges of the dart into contact.

11. A structure formed using the method of any preceding claim.

12. A structure comprising:
a first component positioned between a first part and a second part such that at least a portion of the first part, at least a portion of the first component and at least a portion of the second part overlap each other;
a first weld joint between a first surface of the first component and the first part; and
a second weld joint between a second, opposite surface of the first component and the second part,
wherein the first component, the first part and the second part comprise thermoplastic material.

13. The structure of claim 12, wherein at least a portion of the structure is hollow, or
wherein the structure comprises one of a seatback and a seat pan, optionally a seatback or a seat pan for an aircraft seat.

14. The structure of claim 12 or 13, wherein the first and second parts are a second component or are part of a second component and wherein a hollow portion of the structure is defined by a channel of the second component, the first weld joint and the second weld joint.

15. The structure of claim 14, wherein the channel comprises a first section extending in a first direction and a second section extending in a second direction and wherein the first and second weld joints extend continuously between and / or along the first and second sections.
